# EUROPÄISCHE PATENTSCHRIFT

(11) **EP 1 648 069 B1**
(45) Veröffentlichungstag und Bekanntmachung des Hinweises auf die Patenterteilung: **26.09.2012**
(21) Anmeldenummer: 05021984.9
(22) Anmeldetag: 08.10.2005
(51) Int. Cl.: H02H 7/085, H02H 7/093, H02H 7/097

(54) **Einrichtung zur elektronischen Überwachung eines Kreiselpumpenmotors**
Eletronic control of a motor for centrifugal pump module
Contrôle électronique d'un moteur pour une pompe centrifuge

(30) Priorität: 16.10.2004 DE 102004050446
(43) Veröffentlichungstag der Anmeldung: 19.04.2006
(73) Patentinhaber: KSB Aktiengesellschaft, 67227 Frankenthal (DE)
(72) Erfinder: Gröschel, Jürgen, 91287 Plech (DE); Wirdel, Jens, 67308 Ottersheim (DE)

(56) Entgegenhaltungen:
- EP-A- 0 456 874
- DE-A- 19 822 056
- DE-A1- 10 146 091

## Beschreibung

Gegenstand der Erfindung ist eine Einrichtung zur elektronischen Überwachung des Elektromotors einer Kreiselpumpe mit Hilfe eines oder mehrerer, mit Sensoren ausgestatteter PTC-Temperaturfühler, wobei der Widerstand des oder der PTC-Temperaturfühler in einem außerhalb des Elektromotors angeordneten Auswertegerät mit seinem Wert bzw. ihren Werten registriert wird und bei einem aufgrund einer Temperatursteigerung über einen Grenzwert erhöhten Wert eine Abschaltung des Elektromotors erfolgt (vgl. EP-A-456874, DE-A-10146091).

Es ist bekannt, mit Hilfe von Sensoren, die einen positiven Temperaturkoeffizienten aufweisen, Elektromotoren zu überwachen. Diese auch als PTC-Temperaturfühler bezeichneten Sensoren geben Auskunft über die Wicklungstemperatur der Elektromotoren, wobei sich mit ansteigender Temperatur auch der Widerstand eines PTC-Temperaturfühlers erhöht. Der Widerstandswert wird von dem Auswertegerät gemessen; bei einer vorgegebenen, für den Elektromotor schädlichen Temperatur erfolgt die Abschaltung.

In vielen Fällen ist es erforderlich, neben der Wicklungstemperatur auch andere Betriebsparameter des Elektromotors zu überwachen, um bei eintretenden Störungen rechtzeitig abschalten und den Elektromotor vor Schaden bewahren zu können. Bisher wurden hierfür gesonderte Sensoren eingesetzt. Diese bedurften allerdings eines zusätzlichen Aufwandes, insbesondere was die Auswertung der von diesen gelieferten Werte betraf.

Ziel der Erfindung ist es, eine Einrichtung zur elektronischen Überwachung der eingangs genannten Art zu schaffen, die mit geringem zusätzlichen Aufwand neben der Temperaturüberwachung auch weitere Überwachungsaufgaben übernimmt.

Diese Aufgabe wird erfindungsgemäß dadurch gelöst, daß mit dem PTC-Temperaturfühler bzw. den Fühlern ein oder mehrere weitere, jeweils mit Überbrückungen versehene ohmsche Widerstände in Reihe geschaltet sind, wobei die mit Öffner-Kontakten ausgestatteten Überbrückungen jeweils mit Einrichtungen zur Erkennung unzulässiger Betriebszustände verbunden sind und ein solcher unzulässiger Betriebszustand zu einem Öffnen des jeweiligen Kontaktes führt, und wobei jeder der weiteren Widerstände einen solchen Wert besitzt, daß seine bei Öffnen des Kontaktes erfolgende Aktivierung zu einem Abschalten des Elektromotors führt.

Der Grundgedanke der Erfindung besteht darin, den Meßkreis des ursprünglichen PTC-Auswertegerätes, das bis dahin allein den ohmschen Widerstand des oder der PTC-Temperaturfühler verwertete, für weitere Überwachungsaufgaben dadurch zu öffnen, daß einerseits die temperaturabhängige Widerstandsänderung der PTC-Fühler in unveränderter Weise genutzt und andererseits die weiteren Aufgaben in einer adäquaten Form integriert werden.

Die erfindungsgemäße Einrichtung bedarf eines relativ geringen Aufwandes und kann leicht bei solchen Einrichtungen nachgerüstet werden, die entsprechend dem Gattungsbegriff bereits mit einem oder mehreren PTC-Temperaturfühlern ausgestattet sind.

Eine für viele Einsatzfälle vorteilhafte Gestaltung der Erfindung ergibt sich, wenn mit dem oder den PTC-Temperaturfühlern zwei weitere Widerstände in Reihe geschaltet sind, deren Überbrückungen mit einem von einer Drehrichtungserkennung betätigten Schalter und einem im Elektromotor angeordneten, eine mögliche Leckage detektierenden Schwimmerschalter verbunden sind. Eine derartige Gestaltung bietet sich für Spaltrohrmotoren an, die bezüglich ihrer Drehrichtung überprüft und deren Statorraum auf eindringendes Fördermedium aus dem Pumpenbereich überwacht werden soll.

Um die Auswertung eines aufgetretenen Fehlers zu ermöglichen, wird vorgeschlagen, daß die verwendeten weiteren Widerstände oberhalb des maximalen Widerstandswertes des PTC-Fühlers bzw. dem Summenwiderstand der PTC-Fühler bei der Nennabschalttemperatur liegen.

In zweckmäßiger Ausgestaltung der Erfindung ist die Auswerteelektronik für die Drehrichtungserkennung im Klemmenkasten des Elektromotors angeordnet.

Bei einem für den Motor geforderten Ex-Schutz ist es von Vorteil, wenn in weiterer Ausgestaltung der Erfindung eine in einem explosionsgeschützten Klemmenkasten erfolgende induktive Ankopplung vorgesehen wird, die sowohl die Signalverarbeitung der Drehrichtungserkennung, als auch die Energieversorgung dieser Auswerteelektronik übernimmt. Hierdurch wird eine Energiezufuhr gewährleistet, die einerseits für die gestellte Aufgabe ausreichend, andererseits aber vor allem für den Ex-Schutz unproblematisch ist.

Die induktive Ankopplung erfolgt in bevorzugter Weise mittels zweier Spulen, die die Phasen U und W der Anschlüsse des Elektromotors umschließen. Wenn die Spulen im Gehäuse der Drehrichtungserkennung untergebracht sind und dieses eine Kabeldurchführung für die Anschlusslitzen des Motors enthält, ergibt sich eine platzsparende, wenig aufwendige Gestaltung. Vom Gehäuse der Drehrichtungserkennung aus müssen dann nur noch zwei vergleichsweise dünne elektrische Leitungen zu einem Klemmbrett geführt werden. Dort erfolgt der Anschluss des PTC-Auswertegerätes - vorzugsweise in einem Schaltschrank angeordnet - wie bei einem Standardmotor mit Kaltleitern.

Die erfindungsgemäße Einrichtung eignet sich vor allem für eine Verwendung bei explosionsgeschützten Elektromotoren zum Antrieb von Kreiselpumpen. Dies gilt insbesondere für Spaltrohrmotoren von Kreiselpumpen.

Anhand eines Ausführungsbeispiels wird die Erfindung näher erläutert. Die Zeichnung zeigt in
- Fig. 1: das Schaltschema einer erfindungsgemäßen. Einrichtung;
- Fig. 2: eine elektronische Drehrichtungserkennung mit Spulen für die induktive Ankopplung einer Signalverarbeitung/Energieversorgung an eine Kabeldurchführung;
- Fig. 3: eine elektronische Drehrichtungserkennung mit Anschlusslitzen der drei Phasen zur Versorgung des Elektromotors;
- Fig. 4: einen Klemmenkasten, in den eine der Fig. 2 entsprechende elektronische Drehrichtungserkennung eingesetzt ist.

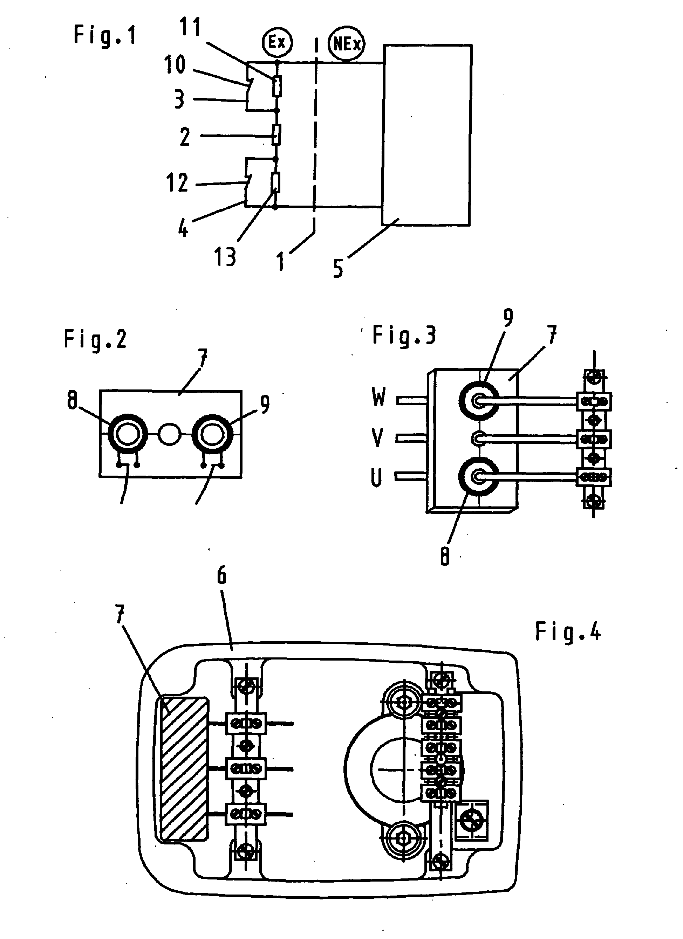

In dem Schaltschema der Fig. 1 sind der explosionsgeschützte Bereich Ex und der nicht explosionsgeschützte Bereich NEx durch eine gestrichelte Linie 1 voneinander getrennt. Im explosionsgeschützten Bereich Ex sind neben einem PTC-Temperaturfühler 2 noch eine Drehrichtungserkennung 3 und ein Schwimmerschalter 4 angeordnet. Anstelle eines PTC-Temperaturfühlers 2 können auch mehrere Fühler vorgesehen sein.

Der in der Statorwicklung des Elektromotors angeordnete PTC-Temperaturfühler 2 arbeitet in bekannter Weise: Durch eine erhöhte Stromaufnahme steigen die Kupferverluste im Stator an. Dadurch erhöht sich die Temperatur der Motorwicklung, wodurch sich auch der Widerstand im PTC-Temperaturfühler 2 erhöht. Bei Erreichen der Nennabschalttemperatur tritt sogar eine sprunghafte Erhöhung auf. Der Widerstandswert wird von einem PTC-Auswertegerät in einem Schaltschrank 5 gemessen. Somit wird bei einer für ihn schädlichen Temperatur der Elektromotor abgeschaltet.

Auch die Drehrichtungserkennung 3 und deren Arbeitsweise sind grundsätzlich bekannt: ein in der falschen Richtung drehender Elektromotor verursacht eine Veränderung der Phasensignale. Dies wird in einem Auswertegerät festgestellt, woraufhin der Motor abgeschaltet wird. Im Ausführungsbeispiel ist das hierfür verwendete PTC-Auswertegerät ebenfalls im Schaltschrank 5 angeordnet. Die Energieversorgung der Drehrichtungserkennung 3 erfolgt durch eine induktive Ankopplung im Klemmenkasten 6 des Elektromotors. Dies geschieht mit Hilfe einer speziellen Kabeldurchführung im Gehäuse der Drehrichtungserkennung 7, über die die Phasen U, V und W in dem Klemmenkasten 6 geführt werden. Dabei sind die Phasen U und W jeweils von einer Spule 8 bzw. 9 umgeben. Die durch die Phasen U und W in den Spulen 8 und 9 verursachte Induktion erzeugt einen relativ schwachen Strom, der allerdings für die Energieversorgung der Drehrichtungserkennung ausreicht. Über die Spulen 8 und 9 werden außerdem die Phasensignale geliefert, die eine für die Feststellung der Drehrichtung notwendige Signalverarbeitung ermöglichen.

Die Drehrichtungserkennung 3 wirkt auf einen Öffner-Kontakt 10, der bei Vorhandensein einer korrekten Drehrichtung geschlossen ist. Das heißt, der über den Widerstand des PTC-Temperaturfühlers 2 geleitete Strom bleibt unbeeinflußt. Wenn aber im Auswertegerät der Drehrichtungserkennung 3 ein gegensinniges Drehen des Motors festgestellt wird, öffnet der Kontakt 10. Ein mit dem Widerstand des PTC-Temperaturfühlers 2 in Reihe geschalteter Widerstand 11, der bis dahin durch den Kontakt 10 überbrückt war, erlangt Wirkung auf den Stromkreis. Der nun im Auswertegerät des PTC-Temperaturfühlers 2 festgestellte Widerstandswert führt sofort zu einer Abschaltung des Elektromotors. Der Auslösewiderstand für die Abschaltung des Motors ist dabei gleich einem gewählten Widerstandswert plus dem geringstmöglichen Widerstandswert des PTC-Temperaturfühlers 2. - Ein wieder erfolgendes Einschalten ist jederzeit möglich. Sobald der Motor die gewünschte Drehrichtung besitzt, bleibt der Kontakt 10 geschlossen.

Der Schwimmerschalter 4, der im Statorraum des Elektromotors, genauer gesagt: des Spaltrohrmotors, angeordnet ist, dient einer Überwachung auf eventuelle Leckagen. Seine Einbindung in die Gesamtheit der Überwachungseinrichtung ist grundsätzlich die gleiche wie die der Drehrichtungserkennung 3. Der Schwimmerschalter 4 besitzt einen Öffner-Kontakt 12, der erst geöffnet wird, wenn der Schwimmer des Schwimmerschalters 4 bei einem Übertritt von Fördermedium aus der angetriebenen Kreiselpumpe in den antreibenden Spaltrohrmotor angehoben wird. In diesem Fall wird auch hier durch Öffnen des Kontaktes 12 ein mit dem Widerstand des PTC-Temperaturfühlers 2 in Reihe geschalteter Widerstand 13 in den Meßkreis geschaltet. Und auch hier führt der nun im Auswertegerät des PTC-Temperaturfühlers 2 festgestellte Widerstandswert zu einer Abschaltung des Elektromotors. - Ein Einschalten ist wieder möglich, wenn der Schwimmerschalter 4 keine Leckage mehr feststellt.

Durch eine Staffelung der Widerstände 11 und 13 oberhalb des maximalen Summen-Widerstandswertes der PTC-Fühler bei der Nennabschalttemperatur ist auch eine Bestimmung des aufgetretenen Fehlers möglich. Hierzu muss jedoch ein spezielles Auswertegerät im Schaltschrank verwendet werden, welches nach dem anliegenden Widerstandswert eine Fehleranzeige möglich macht.

## Patentansprüche

1. Einrichtung zur elektronischen Überwachung des Elektromotors einer Kreiselpumpe mit Hilfe eines oder mehrerer, mit Sensoren ausgestatteter PTC-Temperaturfühler (2), wobei der Widerstand des oder der PTC-Temperaturfühler (2) in einem außerhalb des Elektromotors angeordneten Auswertegerät mit seinem Wert bzw. ihren Werten registriert wird und bei einem aufgrund einer Temperatursteigerung über einen Grenzwert erhöhten Wert eine Abschaltung des Elektromotors erfolgt, **dadurch gekennzeichnet, daß** mit dem oder den PTC-Temperaturfühlern (2) ein oder mehrere weitere, jeweils mit Überbrückungen (3, 4) versehene ohmsche Widerstände (11, 13) in Reihe geschaltet sind, wobei die mit Öffner-Kontakten (10, 12) ausgestatteten Überbrückungen (3, 4) jeweils mit Einrichtungen zur Erkennung unzulässiger Betriebszustände verbunden sind und ein solcher unzulässiger Betriebszustand zu einem Öffnen des jeweiligen Kontaktes (10, 12) führt, und wobei jeder der weiteren Widerstände (11, 13) einen solchen Wert besitzt, daß seine bei Öffnen des Kontaktes (10, 12) erfolgende Aktivierung zu einem Abschalten des Elektromotors führt.

2. Einrichtung nach Anspruch 1, **dadurch gekennzeichnet, daß** mit dem bzw. den PTC-Temperaturfühlern (2) zwei weitere Widerstände (11, 13) in Reihe geschaltet sind, deren Überbrückungen mit einem von einer Drehrichtungserkennung (3) betätigten Schalter (10) und einem im Elektromotor angeordneten, eine mögliche Leckage detektierenden Schwimmer, der einen Schalter (12) betätigt, verbunden sind.

3. Einrichtung nach Anspruch 1 oder 2, **dadurch gekennzeichnet, daß** die verwendeten weiteren Widerstände (11, 13) zur Ermöglichung der Auswertung eines aufgetretenen Fehlers oberhalb des maximalen Widerstandswertes des PTC-Fühlers (2) bzw. dem Summenwiderstandswert der PTC-Fühler bei der Nennabschalttemperatur liegen .

4. Einrichtung nach Anspruch 1 oder 2, **gekennzeichnet durch** eine in einem Klemmenkasten (6) des Elektromotors angeordnete Auswerteelektronik für die Drehrichtungserkennung (7).

5. Einrichtung nach Anspruch 3, **gekennzeichnet durch** eine in einem explosionsgeschützten Klemmenkasten (6) erfolgende induktive Ankopplung, die sowohl die Signalverarbeitung der Drehrichtungserkennung (7), als auch die Energieversorgung der Auswerteelektronik für die Drehrichtungserkennung übernimmt.

6. Einrichtung nach Anspruch 4, **dadurch gekennzeichnet, daß** die induktive Ankopplung mittels zweier Spulen (8, 9) erfolgt, die die Phasen U und W der Anschlüsse des Elektromotors umschließen.

7. Einrichtung nach Anspruch 5, **dadurch gekennzeichnet, daß** die Spulen (8, 9) im Gehäuse der Drehrichtungserkennung (7) untergebracht sind und dieses eine Kabeldurchführung für die Anschlusslitzen des Motors enthält.

8. Verwendung einer Einrichtung nach einem der vorangegangenen Ansprüche für einen explosionsgeschützten Elektromotor zum Antrieb einer Kreiselpumpe.

9. Verwendung einer Einrichtung nach einem der vorangegangenen Ansprüche für einen Spaltrohrmotor zum Antrieb einer Kreiselpumpe.

## Claims

1. Device for electronically monitoring the electric motor of a centrifugal pump using one or more PTC temperature-sensing devices (2) equipped with sensors, wherein the resistor of the PTC temperature-sensing device or devices (2) is registered with its value or their values in an evaluation device arranged outside the electric motor, and in the case of a value which is increased above a limiting value owing to an increase in temperature the electric motor is switched off, **characterized in that** one more further ohmic resistors (11, 13), which are each provided with jumpers (3, 4) are connected in series with the PTC temperature-sensing device or devices (2), wherein the jumpers (3, 4) which are equipped with normally closed contacts (10, 12) are each connected to a device for detecting unacceptable operating states, and such an unacceptable operating state causes the respective contact (10, 12) to open, and wherein each of the further resistors (11, 13) has a value such that its activation, which occurs when the contact (10, 12) opens, causes the electric motor to switch off.

2. Device according to Claim 1, **characterized in that** two further resistors (11, 13) are connected in series with the PTC temperature-sensing device or devices (2), the jumpers of which are connected to a switch (10) which is activated by a direction-of-rotation detector (3) and to a float which is arranged in the electric motor, detects a possible leak and activates a switch (12).

3. Device according to Claim 1 or 2, **characterized in that**, in order to permit the evaluation of a fault which has occurred, the further resistors (11, 13) which are used are above the maximum resistance value of the PTC sensing device (2) or the total resistance value of the PCT sensing devices at the rated switch-off temperature.

4. Device according to Claim 1 or 2, **characterized by** an electronic evaluation system, arranged in a terminal box (6) of the electric motor, for the direction-of-rotation detector (7).

5. Device according to Claim 3, **characterized by** an inductive coupling, which occurs in an explosion-protected terminal box (6) and which both processes the signals of the direction-of-rotation detector (7) and supplies power to the electronic evaluation system for the direction-of-rotation detector.

6. Device according to Claim 4, **characterized in that** the inductive coupling is carried out by means of two coils (8, 9) which enclose the U and W phases of the terminals of the electric motor.

7. Device according to Claim 5, **characterized in that** the coils (8, 9) are accommodated in the housing of the direction-of-rotation detector (7), and said housing contains a cable feedthrough for the connecting conductors of the motor.

8. Use of a device according to one of the preceding claims for an explosion-protected electric motor for driving a centrifugal pump.

9. Use of a device according to one of the preceding claims, for a canned motor for driving a centrifugal pump.

## Revendications

1. Dispositif de contrôle électronique du moteur électrique d'une pompe centrifuge à l'aide d'un ou de plusieurs détecteurs de température PTC (2) équipés de capteurs, la valeur et/ou les valeurs de la résistance du ou des détecteurs de température PTC (2) étant enregistrées dans un appareil d'analyse disposé à l'extérieur du moteur électrique et le moteur électrique étant déconnecté en présence d'une valeur en augmentation du fait d'une hausse de température dépassant une valeur limite, **caractérisé en ce qu'**une ou plusieurs résistances ohmiques (11, 13) supplémentaires respectivement pourvues de shunts (3, 4) sont connectées en série avec le ou les détecteurs de température PTC (2), les shunts (3, 4) dotés de contacts à ouverture (10, 12) étant respectivement reliés à des dispositifs de reconnaissance d'états de fonctionnement non autorisés et la présence d'un tel état de fonctionnement non autorisé provoquant une ouverture du contact (10, 12) respectif et chacune des résistances (11, 13) supplémentaires possédant une valeur définie provoquant une déconnexion du moteur électrique à son activation entraînant l'ouverture du contact (10, 12).

2. Dispositif selon la revendication 1, **caractérisé en ce que** deux résistances (11, 13) supplémentaires sont connectées en série avec le et/ou les détecteurs de température PTC (2), les shunts desdites résistances étant reliés à un contacteur (10) actionné par un système de reconnaissance de sens de rotation (3) et à un flotteur disposé dans le moteur électrique pour détecter une fuite éventuelle, ledit flotteur actionnant un contacteur (12).

3. Dispositif selon la revendication 1 ou 2, **caractérisé en ce que** les résistances (11, 13) supplémentaires utilisées permettent d'analyser une anomalie survenue au-delà de la valeur de résistance maximale du détecteur PTC (2) et/ou de la somme des valeurs de résistance des détecteurs PTC en présence d'une température de déconnexion nominale.

4. Dispositif selon la revendication 1 ou 2, **caractérisé par** la présence d'un système électronique d'analyse du système de reconnaissance de sens de rotation (7) disposé dans un bornier (6) du moteur électrique.

5. Dispositif selon la revendication 3, **caractérisé par** la présence d'un couplage inductif se produisant dans un bornier (6) protégé contre les explosions, ledit couplage prenant en charge tant le traitement du signal du système de reconnaissance de sens de rotation (7) que l'alimentation en énergie du système électronique d'analyse du système de reconnaissance de sens de rotation.

6. Dispositif selon la revendication 4, **caractérisé en ce que** le couplage inductif est réalisé à l'aide de deux bobines (8, 9) entourant les phases U et W des connexions du moteur électrique.

7. Dispositif selon la revendication 5, **caractérisé en ce que** les bobines (8, 9) sont placées dans le carter du système de reconnaissance de sens de rotation (7) et que celui-ci contient un passe-câbles prévu pour les torons de raccordement du moteur.

8. Utilisation d'un dispositif selon l'une quelconque des revendications précédentes pour un moteur électrique protégé contre les explosions servant à l'entraînement d'une pompe centrifuge.

9. Utilisation d'un dispositif selon l'une quelconque des revendications précédentes pour un moteur à gaine servant à l'entraînement d'une pompe centrifuge.
